(19) Europäisches Patentamt
European Patent Office
Office européen des brevets

(11) Numéro de publication: **0 416 993 A1**

(12) # DEMANDE DE BREVET EUROPEEN

(21) Numéro de dépôt: **90402431.2**

(51) Int. Cl.5: **H01G 9/05**

(22) Date de dépôt: **04.09.90**

(30) Priorité: **08.09.89 FR 8911750**

(43) Date de publication de la demande:
**13.03.91 Bulletin 91/11**

(84) Etats contractants désignés:
**DE FR GB IT NL**

(71) Demandeur: **COMPAGNIE EUROPEENNE DE COMPOSANTS ELECTRONIQUES LCC**
**50, rue Jean-Pierre Timbaud**
**F-92400 Courbevoie(FR)**

(72) Inventeur: **Poupard, Dominique**
**THOMSON-CSF, SCPI, Cédex 67**
**F-92045 Paris la Défense(FR)**

(74) Mandataire: **Ruellan-Lemonnier, Brigitte et al**
**THOMSON-CSF SCPI**
**F-92045 PARIS LA DEFENSE CEDEX 67(FR)**

(54) **Electrolyte pour l'imprégnation de condensateurs électrolytiques par du dioxyde de manganèse et son procédé de fabrication.**

(57) L'invention concerne un procédé de fabrication d'un électrolyte à base de nitrate de manganèse pour l'imprégnation de condensateurs électrolytiques par du dioxyde de manganèse, à partir d'une solution mère acide obtenue par réaction du carbonate manganeux $MnCO_3$ avec de l'acide nitrique $HNO_3$, le procédé consistant à ajouter à la solution mère du dioxyde de manganèse et de l'eau oxygénée.

L'invention concerne également l'électrolyte obtenu par ce procédé.

EP 0 416 993 A1

Xerox Copy Centre

# ELECTROLYTE POUR L'IMPREGNATION DE CONDENSATEURS ELECTROLYTIQUES PAR DU DIOXYDE DE MANGANESE ET SON PROCEDE DE FABRICATION

La présente invention concerne la fabrication de condensateurs électrolytiques à électrolyte solide constitué par du dioxyde de manganèse et plus particulièrement ceux où le métal de base est l'aluminium.

Les condensateurs électrolytiques sont surtout utilisés à cause de leur grande capacité dans un volume réduit. Actuellement, trois familles de condensateurs électrolytiques sont présents sur le marché. On trouve des condensateurs à l'aluminium et à électrolyte liquide : l'anode est en aluminium et la cathode est un liquide électrolytique. On trouve aussi des condensateurs au tantale et à électrolyte solide : l'anode est au tantale et la cathode est un électrolyte semiconducteur solide. On trouve enfin des condensateurs à l'aluminium et à électrolyte solide : l'anode est en aluminium et la cathode est un électrolyte semiconducteur solide.

La dernière famille citée a connu récemment un développement certain. La société Philips a développé plusieurs gammes de condensateurs électrolytiques à l'aluminium et à électrolyte solide. L'anode est réalisée à partir d'une feuille enroulée ou pliée. La procédé de fabrication à partir d'une anode en feuille comprend les étapes suivantes :

- découpe de la feuille d'aluminium,
- gravure de la feuille,
- pliage de la feuille d'aluminium gravée dans le cas de condensateurs radiaux ou enroulement dans le cas de condensateurs axiaux,
- anodisation de la feuille pour former une mince couche d'alumine,
- formation de l'électrolyte solide (dioxyde de manganèse) par imprégnation d'une solution de nitrate de manganèse II suivie d'une pyrolyse,
- mise en place d'un contact de cathode.

Le procédé de fabrication de ces condensateurs est assez compliqué. Il comprend une opération de pliage individualisé dans le cas des condensateurs radiaux ou d'enroulement individualisé dans le cas de condensateurs axiaux. L'étape de formation de l'électrolyte solide est la plus délicate. Plusieurs cycles de pyrolyse sont nécessaires (quatre en principe) et ces cycles doivent se dérouler dans des conditions de température et de durée bien déterminées. Ce sont des opérations très difficiles à maîtriser. En effet, le produit de base utilisé est une solution de nitrate de manganèse à 60 % très agressive. La conversion en dioxyde de manganèse doit être très rapide. Une opération de post-formation est nécessaire pour réparer la couche endommagée par le dioxyde d'azote résultant de la pyrolyse.

Il y a une double origine à l'agressivité de la solution de nitrate de manganèse. Pour une part, cette agressivité est liée au dégagement de dioxyde d'azote $NO_2$, comme il a été dit plus haut. D'autre part, la solution utilisée présente un caractère excessivement acide (son pH est inférieur à 2) et elle contient en outre les ions nitrate $NO_3^-$ oxydants, ce qui constitue un danger pour la couche diélectrique d'oxyde ($Al_2O_3$ dans le cas de l'aluminium) amphotère, c'est-à-dire soluble dans un tel milieu en particulier.

Afin de remédier à cet inconvénient, on propose, selon l'invention, de mettre au point une solution chimique de nitrate de manganèse II concentrée mais possédant des propriétés moins agressives vis-à-vis du métal de base (par exemple l'aluminium) et de sa couche d'oxyde.

L'invention a donc pour objet un procédé de fabrication d'un électrolyte à base de nitrate de manganèse pour l'imprégnation de condensateurs électrolytiques par du dioxyde de manganèse, à partir d'une solution mère acide obtenue par réaction du carbonate manganeux $MnCO_3$ avec de l'acide nitrique $HNO_3$) caractérisé en ce qu'il consiste à ajouter à la solution mère du dioxyde de manganèse et de l'eau oxygénée.

L'invention a également pour objet un électrolyte à base de nitrate de manganèse pour l'imprégnation de condensateurs électrolytiques par du dioxyde de manganèse ) caractérisé en qu'il est obtenu selon le procédé ci-dessus.

L'origine du caractère excessivement acide de la solution de nitrate de manganèse II à 60 % utilisée habituellement est liée à la synthèse même de ce composé. Le nitrate de manganèse II est préparé en dissolvant le carbonate manganeux $MnCO_3$ (issu de minerai rhodocrosite) dans l'acide nitrique selon la réaction :

$$MnCO_3 + 2\ HNO_3 \longrightarrow Mn(NO_3)_2 + CO_2\nearrow + H_2O \qquad (1)$$

La solution acide obtenue laisse déposer, par concentration, à la température ambiante, le composé hexahydraté [$Mn(NO_3)_2$, 6 $H_2O$] en cristaux monocliniques blanc rosé, très déliquescents. Ce composé indésirable n'est pas présent dans l'électrolyte selon l'invention. Ceci est un avantage supplémentaire.

Pour effectuer correctement les pyrolyses, il faut disposer d'une solution de Mn $(NO_3)_2$ concentrée. Ces solutions concentrées ne seront stables qu'en milieu acide conformément à l'équilibre d'oxydo-réduction interne :

$Mn(NO_3)_2, x\ H_2O \rightleftarrows MnO_2 + 2\ NO_2, x\ H_2O$

Le dioxyde d'azote $NO_2$ se dismute en milieu aqueux en redonnant de l'acide nitrique.

Selon la présente invention, on part d'une solution mère A de nitrate de manganèse II élaborée selon la réaction (1). C'est une solution très acide puisque son pH est inférieur à 2. A cette solution, contenant des restes d'acide nitrique $HNO_3$, on ajoute de la poudre de dioxyde de manganèse $MnO_2$, puis de l'eau oxygénée $H_2O_2$ pour constituer une solution B. Il se produit alors une réaction d'oxydo-réduction de l'oxyde de manganèse $MnO_2$ par le réducteur $H_2O_2$, réaction qui n'est possible que si le milieu est acide, ce qui est le cas. L'équation correspondante s'écrit :

$$MnO_2 + H_2O_2 + 2\ HNO_3 \longrightarrow Mn(NO_3)_2 + O_2\uparrow + 2\ H_2O \qquad (2)$$

Au fur et à mesure de la réaction 2, le pH de la solution B augmente par suite de la consommation d'acide nitrique $HNO_3$. Lorsque la réaction 2 est terminée, la solution B finalement obtenue est plus concentrée en nitrate de manganèse $Mn(NO_3)_2$ que la solution A, mais son pH est de l'ordre de 5,8 à 6. Cette valeur de pH est compatible avec la stabilité de l'oxyde diélectrique, tel que l'alumine.

Cette solution constitue un électrolyte d'imprégnation qui permet une réaction de pyrolyse plus facilement adaptable, sans attaque notoire de la couche d'oxyde diélectrique sous-jacente.

Cet électrolyte d'imprégnation permet la réalisation de condensateurs électrolytiques dont le métal de base est par exemple l'aluminium ou le tantale.

Le test suivant a été effectué pour comparer la solution selon l'invention à celle utilisée habituellement. Deux feuilles d'aluminium d'épaisseur 30 $\mu$m et de 1 $cm^2$ de surface ont été oxydées sous 13 V dans une solution aqueuse d'acétate d'ammonium à 3 %. Après formation, le courant de fuite mesuré à 10 V est d'environ 1 $\mu$A, mesure effectuée via le liquide de formation et par l'intermédiaire d'une contre-électrode auxiliaire. Après rinçage, l'une des électrodes (E1) est plongée dans la solution de nitrate de manganèse II concentrée (pH environ égal à 2) utilisée habituellement, tandis que l'autre (E2) est plongée dans la solution selon l'invention. La durée de l'imprégnation est de 5 secondes pour chacune des électrodes. Les deux électrodes sont ensuite pyrolysées pendant 5 mn à une température de 300° C, dans un four à moufle.

Après manipulation, la mesure du courant de fuite, effectuée sous une tension de 10 V, donne les résultats suivants. Pour l'électrode E1 (élaborée classiquement) le courant de fuite est de 500 $\mu$A et continue à croître si la mesure se prolonge. Pour l'électrode E2 (élaborée selon l'invention) le courant de fuite est inférieur à 1 $\mu$A, même au bout de 10 mn. Ce test démontre l'intérêt apporté par la présente invention.

## Revendications

1. Procédé de fabrication d'un électrolyte à base de nitrate de manganèse pour l'imprégnation de condensateurs électrolytiques par du dioxyde de manganèse, à partir d'une solution mère acide obtenue par réaction du carbonate manganeux $MnCO_3$ avec de l'acide nitrique $HNO_3$, caractérisé en ce qu'il consiste à ajouter à la solution mère du dioxyde de manganèse et de l'eau oxygénée.
2. Procédé selon la revendication 1, caractérisé en ce que l'ajout de dioxyde de manganèse et d'eau oxygénée est effectué dans des proportions telles que l'électrolyte obtenu ait un pH compris entre 5,8 et 6.
3. Electrolyte à base de nitrate de manganèse pour l'imprégnation de condensateurs électrolytiques par du dioxyde de manganèse, caractérisé en ce qu'il est obtenu selon le procédé des revendications 1 ou 2.

Office européen
des brevets

# RAPPORT DE RECHERCHE EUROPEENNE

Numéro de la demande

**EP 90 40 2431**

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl.5) |
|---|---|---|---|
| A | FR-E-9 246 3 (WESTERN ELECTRIC CO., INC.)<br>* Résumé *<br>- - - | 1,3 | H 01 G 9/05 |
| A | US-A-3 356 452 (DOW CHEMICAL CO.)<br>* Revendication 1 [redacted] *<br>- - - | 1-2 | |
| A | DE-B-1 188 724 (FRAKO)<br>* Revendication 1-3 *<br>- - - - - | 1,3 | |
| | | | **DOMAINES TECHNIQUES RECHERCHES (Int. Cl.5)** |
| | | | H 01 G<br>C 01 G |

Le présent rapport de recherche a été établi pour toutes les revendications

| Lieu de la recherche | Date d'achèvement de la recherche | Examinateur |
|---|---|---|
| La Haye | 05 décembre 90 | SCHUERMANS N.F.G. |

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire
T : théorie ou principe à la base de l'invention

E : document de brevet antérieur, mais publié à la date de dépôt ou après cette date
D : cité dans la demande
L : cité pour d'autres raisons

&: membre de la même famille, document correspondant